# EUROPEAN PATENT SPECIFICATION

(11) **EP 2 065 171 B1**
(45) Date of publication and mention of the grant of the patent: **16.11.2011**
(21) Application number: 06797845.2
(22) Date of filing: 12.09.2006
(51) Int. Cl.: B29D 30/60

(54) **PROCESS FOR PRODUCING TIRE**
VERFAHREN ZUR HERSTELLUNG EINES REIFENS
PROCÉDÉ DE FABRICATION D'UN PNEU

(43) Date of publication of application: 03.06.2009
(73) Proprietor: Toyo Tire & Rubber Co. Ltd., Osaka-shi, Osaka 550-8661 (JP)
(72) Inventor: MATSUOKA, Mamoru, Osaka-shi Osaka 550-8661 (JP); IKEGAMI, Hiroshi, Osaka-shi Osaka 550-8661 (JP)
(74) Representative: Sajda, Wolf E.
(86) International application number: PCT/JP2006/318053
(87) International publication number: WO 2008/032366

(56) References cited:
- JP-A- 10 193 475
- JP-A- 63 089 336
- JP-A- 2004 025 535

## Description

### TECHNICAL FIELD

The present invention relates to a tire producing process for molding a tire shape by discharging a strip rubber having a predetermined cross sectional shape by a rubber discharging apparatus while rotating a molding drum, and sequentially winding the discharged strip rubber around the molding drum.

### BACKGROUND ART

There has been known a so-called strip build construction method for manufacturing a green tire by repeatedly winding a strip rubber having a predetermined cross sectional shape around a surface of a molding drum (for example, Japanese Unexamined Patent Publication JP-A-2004-358 738). In accordance with this strip build, it is possible to mold a tire member having a desired cross sectional shape by sequentially laminating the thin strip rubber, for example, having a rectangular cross sectional shape around the molding drum.
In the conventional art mentioned above, there is employed a rubber mixing extruding machine using a gear pump, and it is possible to continuously extrude and mold the strip rubber having the predetermined cross sectional shape. Further, a strip build construction method using an injection molding machine is disclosed in, for example, Japanese Unexamined Patent Publication JP-A-63-089 336, Japanese Unexamined Patent Publication JP-A-2001-062 941 and the like.
A further conventional process for production of a pneumatic tire is disclosed in JP-A-10-193475. According to this document, a carcass layer is provided between a pair of left and right bead parts and a belt layer is arranged on the outer periphery of the carcass layer in order to mold a vulcanized or unvulcanized tire casing. A plurality of kinds of strip-like unvulcanized rubbers, which may be mutually different in physical properties, are wound around the outer peripheral surface of the tire casing a plurality of times in order to form a laminated rubber as an endless annular tread rubber. The corresponding devices supplying the strip-like rubbers are provided in parallel to each other.

### DISCLOSURE OF THE INVENTION

### PROBLEM TO BE SOLVED BY THE INVENTION

In Japanese Unexamined Patent Publication JP-A-2004-358 738, the rubber mixing extruding machine is installed in such a manner that a screw shaft becomes horizontal, and the strip rubber is discharged in a horizontal direction so as to be wound around the surface of the molding drum. In Japanese Unexamined Patent Publication JP-A-2001-062 941, the injection molding machine is installed in such a manner that a discharging direction of the strip rubber becomes horizontal. In the case of discharging the strip rubber by the rubber discharging apparatus such as the rubber mixing extruding machine or the injection molding machine, there is a problem that a discharge amount of the rubber is not stable at the beginning of the discharge.
Accordingly, in the case of the rubber mixing extruding machine, after a rotation of the gear pump has been carried out for a predetermined time, the rotating motion of the molding drum is started by assuming that the rubber reaches the surface of the molding drum. However, if the rubber is not filled in the gear pump due to the kind of the rubber, a mixing condition of the rubber or the like, there is a case where the discharge amount runs short. This point is the same in the injection molding machine.

In order to solve the above problem, it is necessary to set the discharge time longer at the beginning of discharging the rubber. However, the discharge amount becomes excessive, the rubber comes to a lump shape at a time of starting the discharge, and the uniformity of the manufactured tire may be deteriorated.

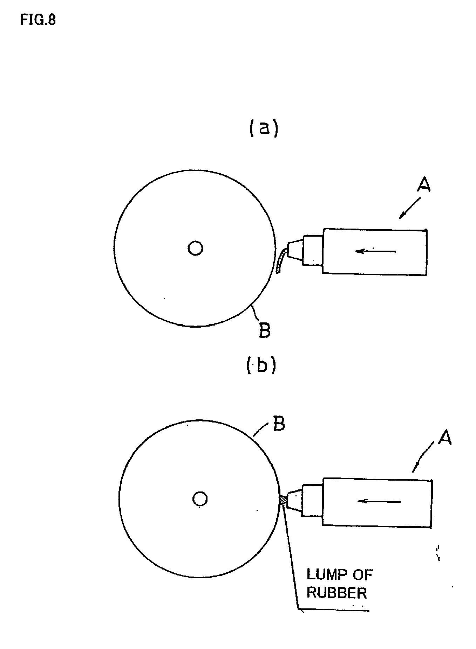

Particularly, in a case where the rubber discharging apparatus **A** is installed horizontally, the discharged rubber tends to come down in a downward direction based on the effect of a gravitational force (see Fig. 8(a)). Accordingly, it is necessary to move the discharge port of the rubber discharging apparatus **A** as close as possible to the surface of the molding drum **B,** at the time of starting the discharge of the rubber.
However, in a posture of the rubber discharging apparatus **A** shown in Fig. 8, the rubber tends to come to the lump shape on the molding drum **B** at a time of starting the discharge of the rubber in cooperation with an influence of the gravitational force (see Fig. 8(b)). In a case of a tire having a large size, the influence of the lump shape of the rubber can be disregarded, however, in a case of a tire having a small size, it can not be disregarded. Therefore, it comes to a problem in the light of a quality such as the uniformity and a weight balance.

Further, in Japanese Unexamined Patent Publication JP-A-63-089 336 mentioned above, six injection molding machines are attached to a gantry structure, and the respective injection molding machines are directed to various directions. However, the rubber comes to a state of being formed as the lump shape due to the influence of the gravitational force whichever may be the posture, and the same problem as mentioned above may be generated. In order to prevent the lump shape mentioned above, it is necessary to move the discharge portion of the rubber discharging apparatus close to the surface of the molding drum, and an extremely precise control is demanded.

The present invention has been made by taking the actual condition mentioned above into consideration, and an object of the present invention is to provide a tire producing process which inhibits a rubber from being formed as a lump shape due to the influence of a gravitational force at the time of starting a discharge of a rubber, and improves a quality such as a uniformity, a weight balance or the like.

### MEANS FOR SOLVING THE PROBLEM

In order to achieve the above object, in accordance with the present invention, there is provided a tire producing process for molding a tire shape by discharging a strip rubber having a predetermined cross sectional shape by a rubber discharging apparatus while rotating a molding drum, and sequentially winding the discharged strip rubber around the molding drum as defined in Patent claim 1.
An advantageous fürther development of the process according to the invention is set forth in partent claim 2.

A description will be given of an operation and an effect of the tire producing process in accordance with the structure mentioned above. In the strip built construction method, the strip rubber having the predetermined cross sectional shape is sequentially wound around the surface of the molding drum, while rotating the molding drum. In order to wind the strip rubber directly with respect to the molding drum, the rubber discharging apparatus is arranged around the molding drum in a diametrical direction.
The strip rubber discharged from the rubber discharging apparatus reaches the surface of the molding drum in a state of being hanged down in the vertically downward direction, and the winding is carried out. The range of the hanged position is set to a range between 45° to the upstream side of the rotation and 45° to the downstream side of the rotation, based on the segment connecting the center of rotation of the molding drum and the utmost position.
Accordingly, it is possible to wind the strip rubber hanged down based on the operation of the gravitational force around the surface of the molding drum in a natural form. Since it is possible to start the winding in the natural form, even at the time of starting the discharge of the strip rubber, it is possible to suppress the problem that the rubber is formed as the lump shape. As a result, it is possible to provide the tire producing process which improves the quality such as the uniformity, the weight balance or the like.

In the tire producing process in accordance with the present invention, it is preferable that the rubber discharging apparatus is arranged in such a posture that its axis is arranged within a range ± 45° based on the segment.

It is possible to make a relation between the rotating direction of the molding drum and the discharging direction of the strip rubber suitable, by setting the range mentioned above, and it is possible to easily attach the strip rubber to the surface of the molding drum.

The rubber discharging apparatus in accordance with the present invention is constituted by a rubber injection molding machine.

If it is intended to extrude the thin strip rubber by the rubber mixing extruding machine, a very high molding pressure is necessary. Since the molding pressure is far beyond a withstand pressure of the gear pump, it is impossible to extrude the thin strip rubber at a high speed. Accordingly, it is possible to discharge the thin strip rubber by using the injection molding machine.

It is preferable that the injection molding machine is provided with a material supply port putting in a rubber material, a screw discharging the input rubber material forward in an axial direction while mixing, a material filling chamber arranged in a leading end side of the screw and in which the mixed rubber material is filled, and a material passage supplying the rubber material to the material filling chamber from the leading end side of the screw.

By using the injection molding machine mentioned above, the strip rubber is wound with respect to the molding drum based on a step of supplying the rubber material from a material supply port so as to discharge the rubber material forward while mixing by the screw, and filling in the material filling chamber via the material passage, a step that both the screw and the material supply port are moved backward in accordance with a filling motion of the rubber material to the material filling chamber, and a step of moving forward the screw so as to discharge the strip rubber having the predetermined cross sectional shape to the molding drum from the material filling chamber after the rubber material is filled at a predetermined amount in the material filling chamber.

In accordance with the injection molding machine, if the rubber material is input from the material supply port, the rubber material is discharged forward while being mixed by the screw. The forward moving rubber material is fed to the material filling chamber via the material passage in the leading end side of the screw. The screw is gradually moved backward in accordance that the rubber material is filled in the material filling chamber. At this time, there is employed such a structure that the material supply port is moved backward together with the screw.
Accordingly, a relative positional relationship between the screw and the material supply port is not changed regardless of an input timing of the rubber material. If the rubber material is filled in the material filling chamber at the predetermined amount, the strip rubber having the predetermined cross sectional shape is injected to the surface of the molding drum from the material filling chamber by moving the screw forward. In other words, the screw doubles as a function of a piston. The tire shape is formed on the molding drum by discharging the strip rubber while rotating the molding drum.

The injection molding machine used here is an injection molding machine of a type making the screw function as the piston. In other words, it is constructed as a so-called first-in first-out structure, and a staying time of the rubber material within the material filling chamber becomes constant regardless of the input timing of the rubber material. Accordingly, the rubber material is injected from the injection port in a state in which a degree of plasticity is fixed.
Further, since the relative positional relationship between the screw and the rubber supply port is not changed, it is possible to make the degree of mixing of the rubber material constant. As a result, it is possible to discharge the strip rubber from the injection port in a state in which the degree of plasticity and the degree of mixing are uniform, regardless of the input timing of the rubber material.

It is preferable that the injection molding machine in accordance with the present invention is provided with an opening and closing mechanism which is attached to the leading end side of the screw and capable of opening and closing the material passage, a first cylinder portion which surrounds the screw, and a material supply port which is attached to the first cylinder portion, the first cylinder portion is structured such as to be slidable with respect to a second cylinder portion, and the first cylinder portion and the screw are movable in a longitudinal direction in an interlocking manner,
wherein the injection molding machine has a step of closing the material passage by the opening and closing mechanism after the rubber material has been filled in the material filling chamber at a predetermined amount, and a step of discharging the strip rubber by pressing the rubber material in the material filling chamber by a leading end side portion of the opening and closing mechanism and a leading end portion of the first cylinder portion.

In accordance with this structure, the opening and closing mechanism is provided in the leading end side of the screw, whereby it is possible to control so as to open and close the material passage. At a time of inputting the rubber material so as to fill in the material filling chamber, the material passage is left open. At a time of moving forward the screw so as to inject the strip rubber, the material passage is closed. Further, the screw is accommodated in the inner portion of the first cylinder portion, and the material supply port is attached to the first cylinder portion.
Further, the first cylinder portion is structured such as to be slidable with respect to the second cylinder portion, and the first cylinder portion, the screw and the material supply port can integrally move forward and backward relatively with respect to the second cylinder portion. If the opening and closing mechanism is closed, the function of the piston can be achieved by both of the leading end portion of the first cylinder portion and the leading end side portion of the opening and closing mechanism. In other words, it is possible to secure a greater pressing area, and it is possible to efficiently discharge the strip rubber.

### BRIEF DESCRIPTION OF THE DRAWINGS

- Fig. 1A: is a schematic view showing a structure of a green tire producing facility.
- Fig. 1B: is a schematic view showing a detailed structure of the producing facility.
- Fig. 2A: is a first view explaining a motion of an injection molding machine and a molding drum at the time of producing a tire.
- Fig. 2B: is a second view explaining the motion of the injection molding machine and the molding drum at the time of producing the tire.
- Fig. 2C: is a third view explaining the motion of the injection molding machine and the molding drum at the time of producing the tire.
- Fig. 2D: is a fourth view explaining the motion of the injection molding machine and the molding drum at the time of producing the tire.
- Fig. 2E: is a fifth view explaining the motion of the injection molding machine and the molding drum at the time of producing the tire.
- Fig. 2F: is a sixth view explaining the motion of the injection molding machine and the molding drum at the time of producing the tire.
- Fig. 2G: is a seventh view explaining the motion of the injection molding machine and the molding drum at the time of producing the tire.
- Fig. 2H: is an eighth view explaining the motion of the injection molding machine and the molding drum at the time of producing the tire.
- Fig. 21: is a ninth view explaining the motion of the injection molding machine and the molding drum at the time of producing the tire.

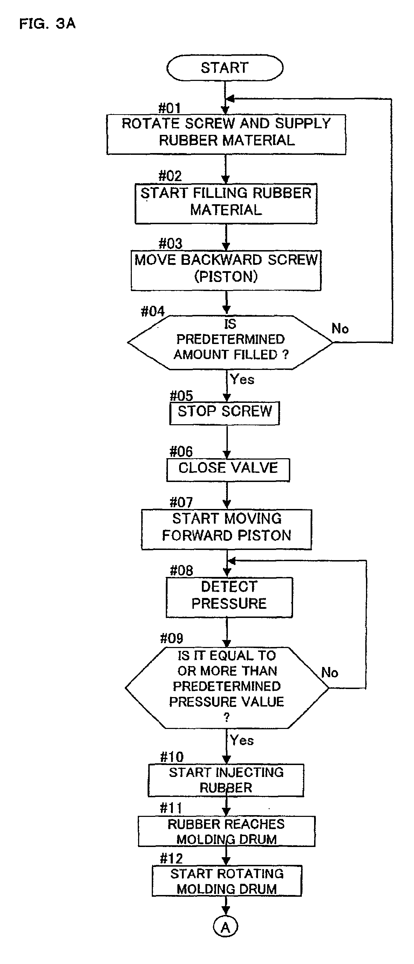

- Fig. 3A: is a first flow chart explaining a tire producing step.

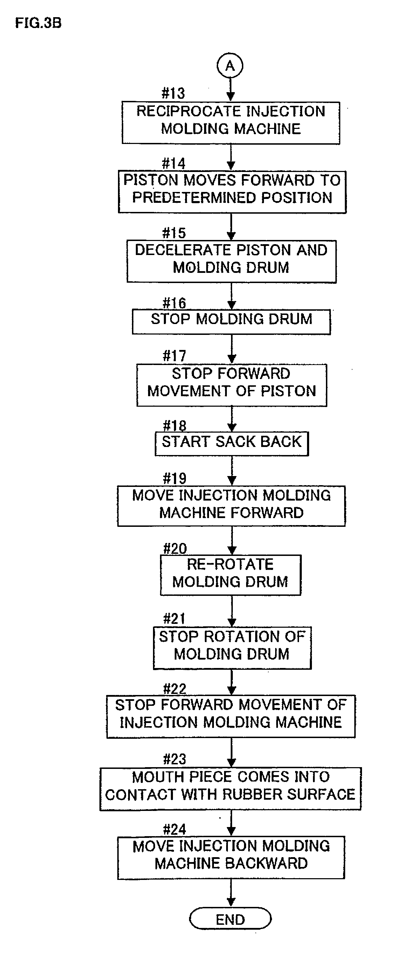

- Fig. 3B: is a second flow chart explaining the tire producing step.

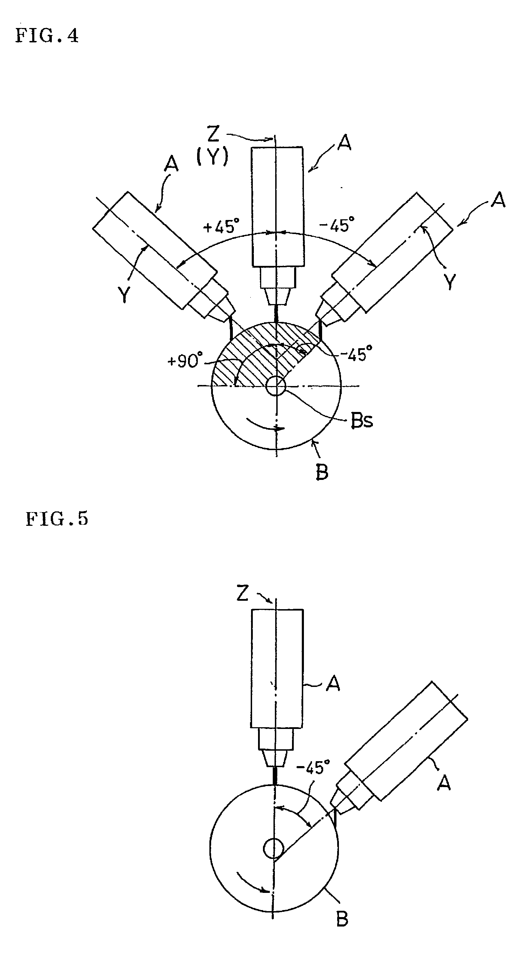

- Fig. 4: is a view explaining an allowable range of a hanged position of a strip rubber.
- Fig. 5: is a view explaining a case of getting over the allowable range of the hanged position of the strip rubber.

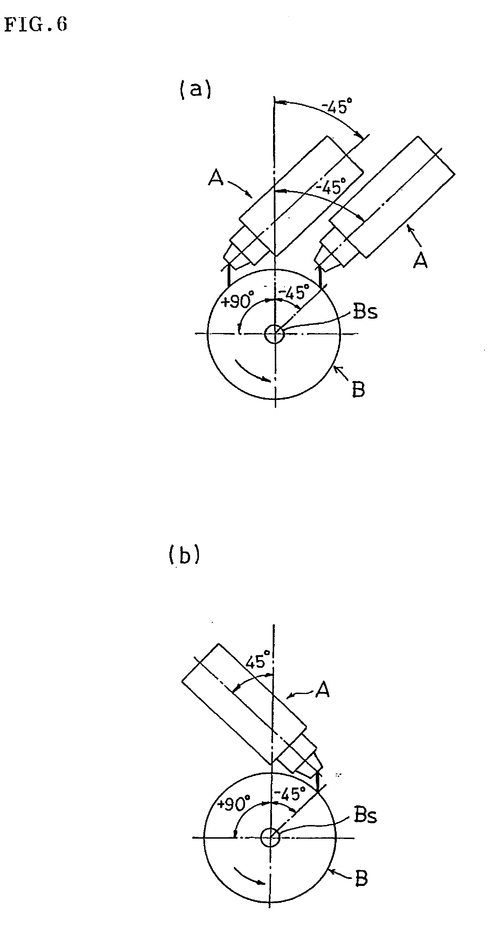

- Fig. 6: is a view explaining a preferable range of a posture of an injection molding machine.

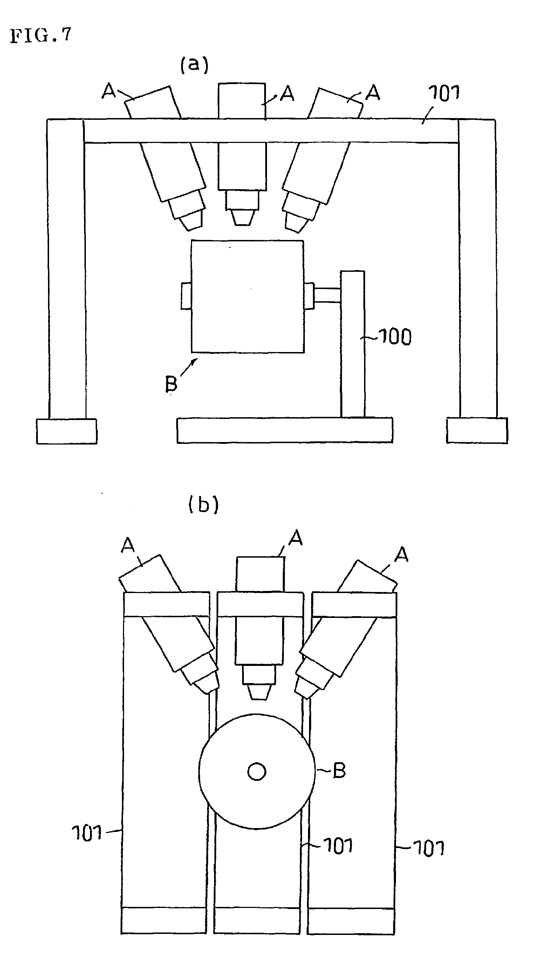

- Fig. 7: is a view showing a structure example using a plurality of injection molding machines.
- Fig. 8: is a view explaining a problem in a conventional art.

### DESCRIPTION OF REFERENCE NUMERALS

- A =: Injection molding machine
- B =: Molding drum
- C =: Material passage
- S =: Strip rubber
- P =: Piston
- Y =: Axis
- Z =: Segment
- 1 =: Screw
- 2 =: First cylinder
- 2a =: Leading end surface
- 3 =: Chuck valve
- 4 =: Material filling chamber
- 5 =: Member
- 6 =: Mouth piece
- 6a =: Injection port
- 7 =: Pressure sensor
- 8 =: Material supply port
- 9 =: Second cylinder
- 10 =: Servo motor
- 11 =: Gear
- 12 =: Hydraulic servo motor
- 27 =: Control portion

### BEST MODE FOR CURRYING OUT THE INVENTION

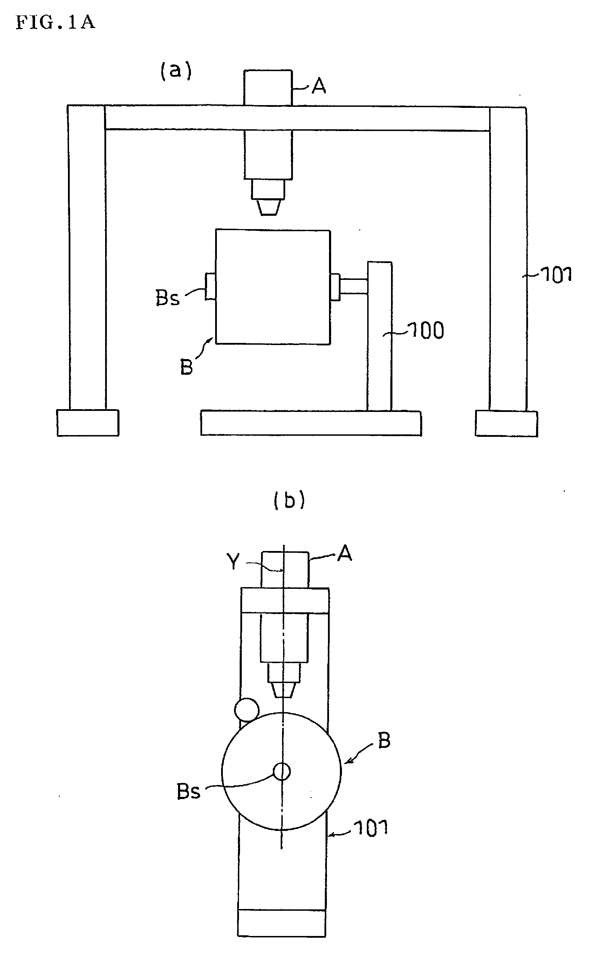

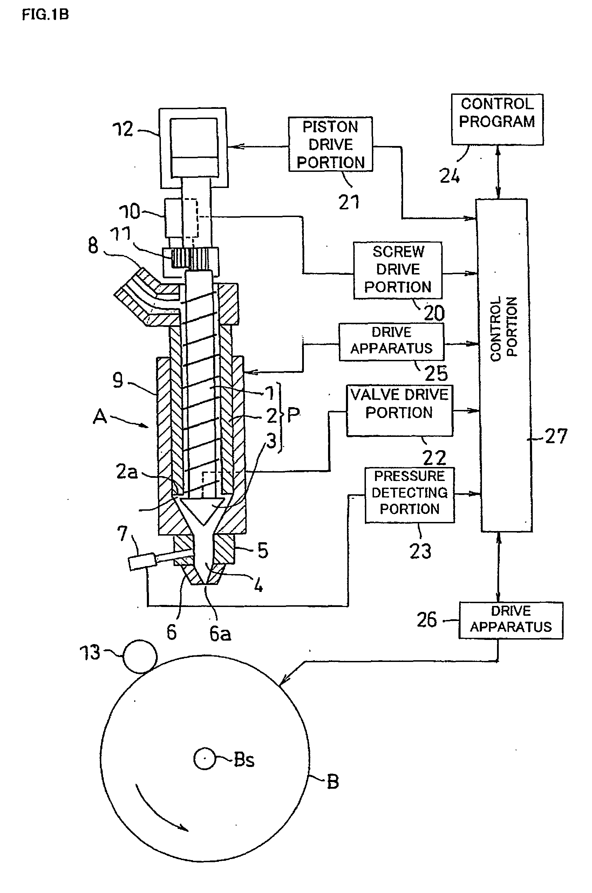

A description will be given of a preferred embodiment of a tire manufacturing method in accordance with the present invention with reference to the accompanying drawings. Fig. 1A is a schematic view showing a structure of a producing facility used for producing a tire, in which Fig. 1A(a) is a side elevational view and Fig. 1A(b) is a front elevational view. Fig. 1B is a schematic view showing a detailed structure of the producing facility.

### Structure of Producing Facility

A production of a green tire is carried out in accordance with a strip build construction method in the present invention. The strip build can manufacture a tire having a desired shape by discharging a strip rubber having a small cross sectional area on a molding drum, and winding the strip rubber around the molding drum. It is possible to produce a tire having a more precise cross sectional shape in accordance that the cross sectional area of the strip rubber is made smaller. An injection molding machine A is used as the rubber discharging apparatus, and it is possible to discharge (inject) the thin strip rubber.

As shown in Fig. 1A, a molding drum B on drive shaft Bs is supported by a support body 100, and is rotationally driven by a drive apparatus. Further, an injection molding machine **A** is supported to a gantry support frame 101. As illustrated, the injection molding machine **A** is attached in a vertically downward posture, and its axis **Y** is directed to the direction the drive shaft Bs (a center of rotation) of the molding drum **B.**

A description will be given in detail of a producing facility with reference to Fig. 1B. The injection molding machine **A** is installed in a vertically downward direction, and a screw 1 is arranged along the axis **Y.** The screw 1 has a function of discharging an input rubber material forward (in a top-to-down direction in Fig. 1) while mixing same. The screw 1 is installed in an inner portion of a first cylinder 2 (corresponding to the first cylinder portion), and a space through which the rubber material passes is formed between an inner wall surface of the first cylinder 2 and an outer surface of the screw 1.

A chuck valve 3 (corresponding to the opening and closing mechanism) is provided in a leading end portion of the screw 1, and controls so as to open and close a material passage **C** which puts the rubber material through a portion between a back surface side of the chuck valve 3 and a leading end surface 2a of the first cylinder 2. In Fig. 1B, the material passage **C** is in an open state, and the rubber material mixed by the screw 1 can pass therethrough.

A material filling chamber 4 is provided in a leading end side of the chuck valve 3, and the rubber material passing through the material passage **C** is filled in the material filling chamber 4. The material filling chamber 4 is formed in an internal space of a member 5. A mouth piece 6 is provided in a leading end side of the member 5, and an injection port 6a is formed in the mouth piece 6. The injection port 6a is produced as a shape corresponding to a cross sectional shape of the injected strip rubber. Further, a pressure sensor 7 is provided for detecting a rubber pressure within the material filling chamber 4.

A material supply port 8 is integrally attached to a rear end side of the first cylinder 2, and the rubber material is input therefrom: The rubber material is input in accordance with an appropriate mode such as a ribbon shape or the like. The first cylinder 2 is fitted to an inner wall surface of a second cylinder 9, and the first cylinder 2 can slide in a longitudinal direction along the inner wall surface of the second cylinder 9.

A servo motor 10 is provided for rotationally driving the screw 1, and is coupled via a gear 11. Further, a hydraulic servo motor 12 is provided for moving the screw 1 forward and backward. The hydraulic servo motor 12 is coupled to a rear end portion of the screw 1. Further, the screw 1, the first cylinder 2, the chuck valve 3, the servo motor 10 and the gear 11 are constructed as an integrated unit, and the whole unit is moved forward and backward by the hydraulic servo motor 12. If the screw 1, the first cylinder 2 and the chuck valve 3 are moved forward, it is possible to inject the rubber material within the material filling chamber 4 from the injection port 6a. Accordingly, the screw 1, the first cylinder 2 and the chuck valve 3 serve as the piston **P.**

A screw drive portion 20 is constructed by a drive circuit driving the servo motor 10 or the like. Further, it is possible to obtain a drive amount of the servo motor 10 from a signal of an encoder, whereby it is possible to control the rotating speed of the screw 1. A piston drive portion 21 is constructed by a drive circuit driving the hydraulic servo motor 12 or the like. Further, it is possible to obtain a drive amount of the servo motor 12 from the signal of the encoder, and it is possible to monitor the position in the longitudinal direction of the screw 1.
A valve drive portion 22 has the function of controlling an opening and closing drive of the chuck valve 3. A pressure detecting portion 23 detects the pressure of the rubber within the material filling chamber 4 based on a signal from the pressure sensor 7. A control program 24 is a program for making the injection molding machine **A** and the molding drum **B** carry out a desired motion.

A drive apparatus 25 is an apparatus for driving the whole injection molding machine **A** so as to reciprocate with respect to the width direction of the molding drum **B.** At the time of making the molding drum **B** carry out a winding motion of the strip rubber, the motion is carried out in a state of combining a reciprocating movement of the injection molding machine **A** and a rotational movement of the molding drum **B.** Further, the driving apparatus 25 can be moved so as to move the whole injection molding machine **A** close to or away from the surface of the molding drum **B.**

The molding drum **B** is driven by a drive apparatus 26. The drive apparatus 26 is constructed by a servo motor, a speed reducing mechanism for coupling the servo motor to the molding drum **B**, a drive circuit and the like. In the case of winding the strip rubber around the molding drum **B**, the molding drum **B** may be moved in the width direction, in place that the injection molding machine **A** is moved in the width direction.

A control portion 27 is structured such as to generally control the motions of the injection molding machine **A** and the molding drum **B,** and carries out various controls based on the control program 24, a pressure detected by and the pressure detecting portion 23, a moving amount of the screw 1 and the like.

A stitching roller 13 is provided in the vicinity of the surface of the molding drum **B,** and applies a pressure to the strip rubber **S** attached to the surface of the molding drum **B.** Accordingly, it is possible to secure an attaching strength of the strip rubber S. The stitching roller 13 is energized to the surface of the molding drum **B** by a spring (not shown). The stitching roller 13 may be integrally attached and supported to the injection molding machine **A.**

### Tire Producing Step

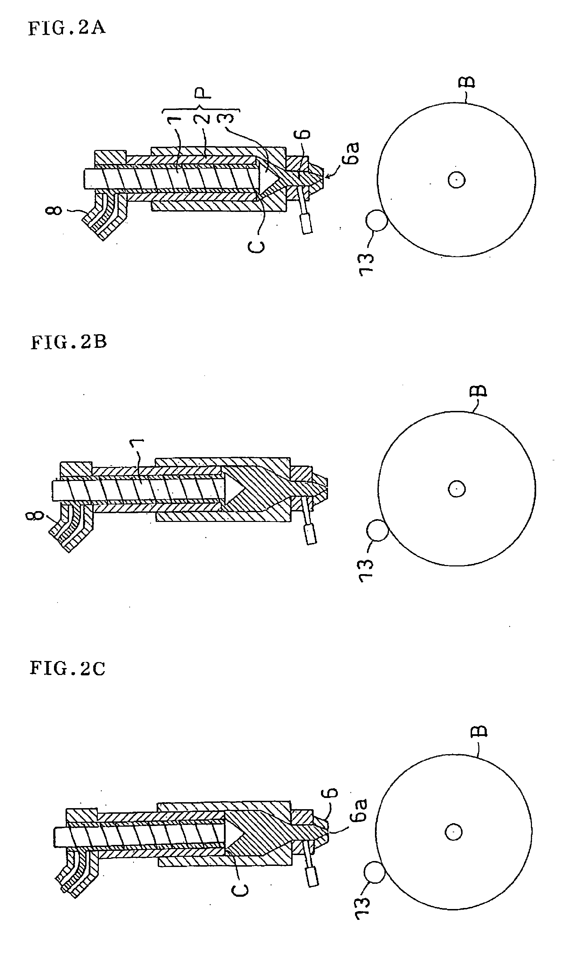

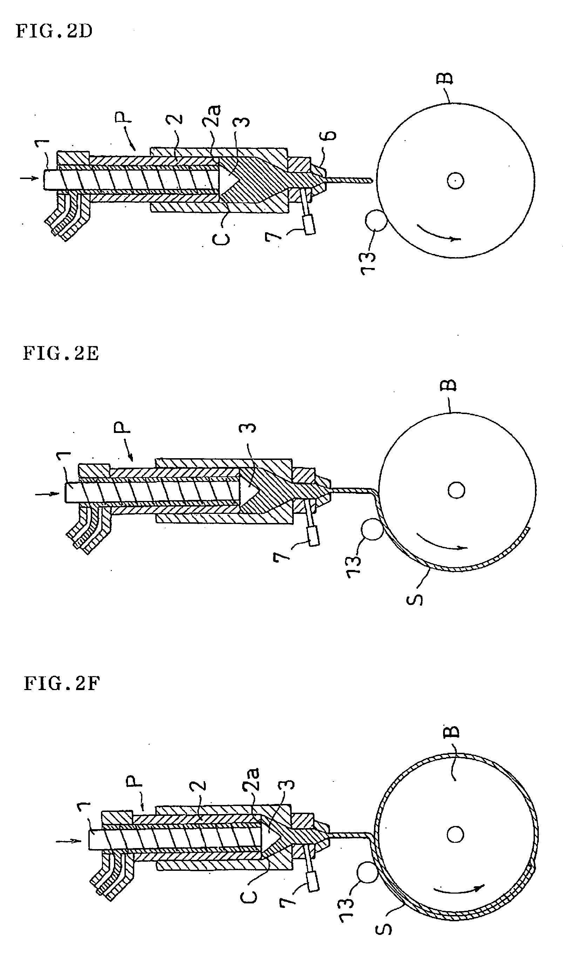

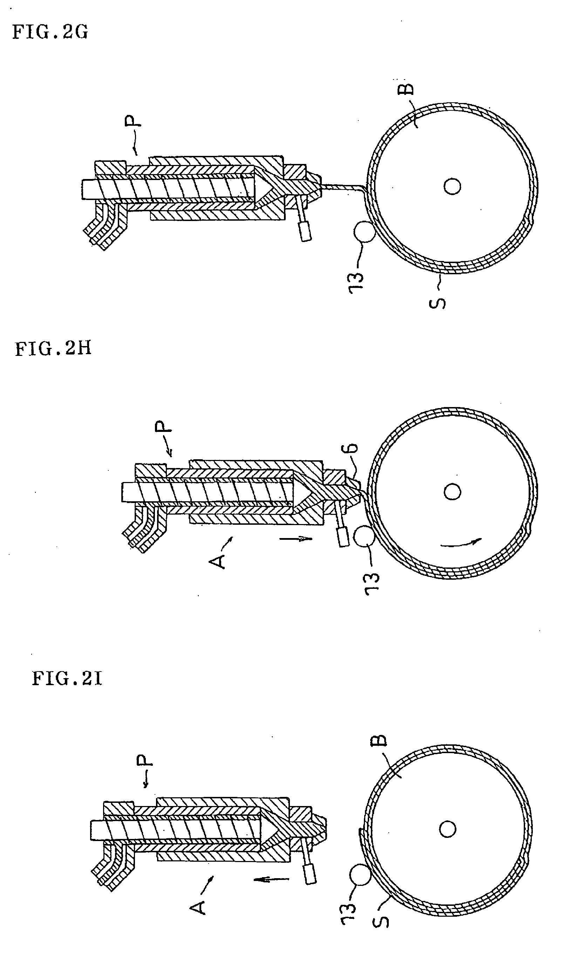

Next, a description will be given of a motion at the time of producing the green tire by using the producing facility shown in Figs. 1A and 1B. Fig. 2 is a view explaining the motion of the injection molding machine **A** and the molding drum **B,** and Fig. 3 is a flow chart explaining the motion.

First, it is necessary to weigh in the rubber material. As shown in Fig. 2A, the molding drum **B** and the injection molding machine **A** come to a state in which they are apart at a predetermined interval. First, the screw 1 is rotated so as to input the rubber material from the material supply port 8 (Step #01). The input rubber material is discharged forward (downward) while being mixed by the rotating screw 1. Further, the chuck valve 3 is in an open state, and the rubber material is filled in the material filling chamber 4 through the material passage **C** in the leading end side of the screw 1 (Step #02).
While the rubber material is filled, the internal pressure of the rubber acts on the injection port 6a, however, does not become as high as the pressure at which the rubber is injected from the injection port 6a. Accordingly, the rubber material is not discharged from the injection port 6a while the rubber material is filled.

If the rubber material is filled in the material filling chamber 4, the piston **P** is gradually moved backward based on the pressure of the filled rubber (Step #03). At this time, the first cylinder 2 is moved backward together with the screw 1, in addition to the screw 1. Accordingly, the material supply port 8 which is integrated with the first cylinder 2 is moved backward together. Therefore, the relative positional relationship between the screw 1 and the material supply port 8 is not changed even while the rubber material is filled.
Accordingly, the rubber material is fed in the material filling chamber 4 always in the same mixed state, regardless of the timing of inputting the rubber material. Further, since the precedently supplied rubber material is filled from the leading side of the material filling chamber 4, the injection molding machine **A** is structured as a first-in first-out type.

If the screw 1 is moved backward, its moving amount is detected by the encoder. The moving amount of the screw 1 has a linear relationship with the amount of the supplied rubber material. Accordingly, the step determines based on the moving amount of the screw 1 whether or not the predetermined amount of rubber material is supplied (Step #04), and if it is detected that the predetermined amount is supplied, the step stops the rotation of the screw 1 (Step #05). This control is carried out based on the function of the control portion 27. In accordance with the steps mentioned above, the weighing of the material is finished (Fig. 2B).

After the weighing has been finished, the step drives the chuck valve 3 so as to close the material passage **C** (Step #06). This state is shown in Fig. 2C. At this time, the leading end side of the chuck valve 3 and the leading end surface 2a of the first cylinder 2 work as a pressing surface of the piston **P.** It is possible to secure the greater pressing surface by closing the chuck valve 3.

Next, the step drives the piston drive portion 21 so as to move the piston **P** forward (Step #07). Accordingly, the screw 1, the first cylinder 2, the chuck valve 3 and the like are integrally moved forward. At the same time, the step detects a rubber pressure in the vicinity of the injection port 6a by the pressure sensor 7 (Step #08). This is because the strip rubber **S** is not injected immediately even if the piston **P** is moved forward, and the strip rubber **S** is injected only after the pressure has reached the predetermined value. In other words, an injection starting time point of the strip rubber S is detected by the pressure sensor 7. The predetermined value can be previously set.

If it is detected that the pressure value has become equal to or higher than a predetermined value (Step #09), the strip rubber S having the predetermined cross sectional shape is started being injected from the injection port 6a (Step #10). This state is shown in Fig. 2D. The injected strip rubber S is hanging down directly downward based on the operation of the gravitational force. If the predetermined amount of strip rubber S is injected, the leading end of the hanged strip rubber S reaches the surface of the molding drum **B** (the utmost position of the molding drum) (Step #11). The rotation of the molding drum **B** is started in conformity to the reaching timing (Step #12). It is preferable to start the rotation of the molding drum **B just** before or at the same time when the leading end of the strip rubber **S** reaches the surface of the molding drum **B.**

Further, the rotation of the molding drum **B** is controlled in synchronization with the motion of the piston **P.** In other words, at the time of winding the strip rubber **S,** the piston **P** is moved forward at a fixed speed, and the molding drum **B** is rotationally driven at a fixed speed. During the winding of the strip rubber **S,** the speed of the piston **P** and the rotating speed of the molding drum **B** have a predetermined relationship. At the time of the end of the winding of the strip rubber **S,** a decelerating motion is carried out, however, the decelerating drive is carried out in a synchronized state in the molding drum **B** at this time. Accordingly, it is possible to wind the strip rubber around the molding drum **B** at a fixed tension.

Further, if the rotational drive of the molding drum **B** is started, and the strip rubber S is wound around the molding drum **B,** the outer diameter becomes gradually larger. Taking this regard into consideration, the relative arrangement relationship between the mouth piece 6 and the molding drum **B** is defined. The strip rubber S is pressed by the stitching roller 13 just after the strip rubber **S** has been wound around the surface of the molding drum **B,** and can be securely wound (see Fig. 2E).

If the piston **P** is moved forward to the predetermined position, a reciprocating movement of the injection molding machine **A** is started by the drive apparatus 25 (Step #13). The starting time point corresponds to a state in which an approximately one rotation of winding of the strip rubber S is finished. A state in which several rotations of strip rubber **S** are wound is shown in Fig. 2F.

If the piston **P** is moved forward and it is detected that the piston **P** is moved forward to the predetermined position (Step #14), the deceleration of the piston **P** is started (Step #15). The predetermined position can be previously set, and the detection of the predetermined position can be carried out based on the moving amount of the piston **P.** The rotation of the molding drum **B** is decelerated while working with the deceleration of the piston **P.** Accordingly, the molding drum **B** is stopped (Step #16), and the piston **P** is also stopped (Step #17). This state is shown in Fig. 2G. It is preferable to stop the molding drum **B** at the same time of stopping the piston **P,** or just before stopping the piston **P.** It is for preventing any extra tension from being applied to the strip rubber.

Next, in order to carry out a sack back, the step moves the piston **P** backward (Step #18). The sack back prevents the rubber material from hanging down from the injection port 6a due to a residual pressure within the material filling chamber 4 even after the end of the injection based on the pressing of the piston **P.** It is possible to do away with the hanging of the rubber material by removing the residual pressure based on the sack back. If the internal pressure is detected by the pressure sensor 7 while the piston **P** is moved backward, and it is detected that the pressure value is lowered to the predetermined value or less, the piston **P** is stopped. The predetermined value may be previously set.

At the same time or approximately at the same time of the sack back motion, the whole of the injection molding machine **A** is moved forward so as to be moved close to the surface of the molding drum **B** (Step #19). At the same time, the molding drum B is rotated again in a counterclockwise direction (Step #20). This state is shown in Fig. 2H. Both the elements are driven for preventing a slack from being generated between the surface of the molding drum **B** and the injection port 6a.
If the mouth piece 6 comes close to the predetermined position, the rotation of the molding drum **B** is stopped (Step #21). The forward movement of the injection molding machine **A** is stopped just after this (Step #22). At this time, the surface of the mouth piece 6 comes into contact with the strip rubber **S** wound around the surface of the molding drum **B** (Step #23).

Next, the injection molding machine **A** is again moved backward (Step #24). Since the mouth piece 6 is moved far after bringing the mouth piece 6 into contact with the strip rubber **S,** it is possible to smoothly separate the mouth piece 6 and the wound strip rubber **S.** In other words, it is possible to separate the rubber without applying any unreasonable force to the strip rubber S. This state is shown in Fig. 2I.

In accordance with the above, the winding motion of the predetermined amount of rubber material filled in the material filling chamber 4 is finished. In the case of continuously carrying out the winding motion, the motions mentioned above may be repeated. In accordance with the structure of the present invention, the degree of mixing is constant, regardless of the timing when the rubber material is input, until the rubber material is filled in the material filling chamber after being supplied.
In accordance with the structure of the present invention, since it is possible to make the degree of mixing and the degree of plasticity of the rubber constant regardless of the supply timing of the rubber, it is possible to improve a uniformity of the produced tire.

Further, since the injection molding machine **A** is arranged just above the molding drum **B** in such a manner that the axis of the screw is vertical, it is possible to start winding around the molding drum in accordance with a natural mode based on the operation of the gravitational force. Accordingly, no lump of the rubber is generated at a time of starting the winding, and it is possible to produce a tire having a good quality with regard to the uniformity and the weight balance.
Further, since the rubber is hanging down based on the operation of the gravitational force, it is not necessary to move the injection molding machine **A** close to the molding drum **B** at the time of starting the winding, and it is possible to fix the injection molding machine **A** at the same position just before the end of the winding.

### Other Embodiment

In the present embodiment, the description is given of the structure example in which the injection molding machine **A** is arranged vertically just above the molding drum **B,** however, the present invention is not limited to this. Fig. 4 is a view explaining an allowable range of the hanged position of the strip rubber **S.** In Fig. 4, the molding drum **B** is structured such as to be rotationally driven in a counterclockwise direction.
It is preferable to set such that the hanged position enters into a range between 45° in an upstream side of the rotation and 45° in a downstream side of the rotation, based on a segment (a straight line) **Z** connecting the center of rotation of the molding drum **B** and the utmost position (a vertex) (see the hatched portion in Fig. 4). Within this range, it is possible to naturally wind the strip rubber hanging down from the discharge port 6a based on the operation of the gravitational force. An allowable range becomes wider in the downstream side of the rotation in accordance with a relation with the rotating direction of the molding drum **B.**

Fig. 5 shows a state in which the hanging position deflects from the allowable range, in the downstream side of the rotation. In this case, since the strip rubber S is hanging down in the form of going against the rotating direction of the molding drum **B,** it becomes hard to feed the rubber to the forward side in the rotating direction.

Next, a description will be given of a preferable set range of an axis **Y** of the injection molding machine **A.** As shown in Fig. 4(a), it is preferable to set the axis **Y** of the injection molding machine **A** to a range of ± 45°. Within this range, it is possible to wind the strip rubber in accordance with a natural form based on the operation of the gravitational force. Within the range, it is possible to set a posture as shown in Fig. 6(a).
However, in a case where the hanging position exists in the upstream side of the rotation, it is considered that a posture shown in Fig. 6(b) is not preferable. This is because the discharging direction of the strip rubber is inverse to the rotating direction of the molding drum **B,** and the strip rubber is hard to be wound around the molding drum **B.** Further, there is a risk that the rubber catches on the leading end of the mouth piece 6 so as to be torn. Further, the axis **Y** of the injection molding machine **A** may be directed toward the center of rotation of the molding drum **B,** or may deflect from the center of rotation.

In the present embodiment, the description is given on the assumption that the used number of the injection molding machine **A** is one, however, it goes without saying that a plurality of injection molding machines **A** may be used. Fig. 7 is a view showing a structure example in which three injection molding machines **A** are arranged. In this case, the support frame 101 is provided in each of the injection molding machines **A.** It is possible to efficiently carry out a winding work by simultaneously winding by a plurality of injection molding machines **A.**
In this case, in order to prevent three injection molding machines **A** from interfering with each other, one is installed in a vertical posture, and the remaining two are installed in an inclined posture as shown in Fig. 7(b), In this case, it goes without saying that the axis of the injection molding machine **A** and the hanging position of the strip rubber are set to the preferable range mentioned above.

The structure of the producing facility and the tire producing process explained in the present embodiment show one example, and various modified examples can be considered. For example, various modified examples can be considered with regard to the internal structure of the injection molding machine **A** and the drive mechanism of the piston **P**.

## Claims

1. A tire producing process for molding a tire shape by discharging a strip rubber (S) having a predetermined cross sectional shape by a rubber discharging apparatus (A) while rotating a molding drum (B), and sequentially winding the discharged strip rubber (S) around the molding drum (B),
wherein the strip rubber (S) discharged from the rubber discharging apparatus (A) is hanging down in a vertically downward direction so as to be wound around a surface of the molding drum (B), and the hanging position of the strip rubber (S) is set to a range between 45° to an upstream side of the rotation and 90° to a downstream side of the rotation, based on a segment connecting a center of rotation (Bs) of the molding drum (B) and an utmost position,
wherein three rubber injection molding machines are used for discharging a plurality of rubber strips, wherein one of the injection molding machines is installed in a vertical posture, whilst the remaining two injection molding machines are installed in an inclined posture not interfering with each other, and wherein the axes of them are set to the identified range.

2. The tire producing process as claimed in claim 1,
wherein the rubber discharging apparatus (A) is arranged in such a posture that its axis is arranged within a range ± 45° based on the segment.

## Patentansprüche

1. Verfahren zur Herstellung eines Reifens zum Aufbauen einer Reifenform durch Abgeben eines Gummistreifens (S) mit einer vorbestimmten Querschnittsform von einer Gummiabgabevorrichtung (A) unter Rotation einer Formtrommel (B) sowie durch fortschreitendes Herumwickeln des abgegebenen Gummistreifens (S) um die Formtrommel (B) herum,
wobei der von der Gummiabgabevorrichtung (A) abgegebene Gummistreifen (S) zum Herumwickeln um eine Oberfläche der Formtrommel (B) vertikal nach unten hängt und die Hängeposition des Gummistreifens (S) in einem Bereich zwischen 45° zu einer stromaufwärtigen Seite der Rotation und 90° zu einer stromabwärtigen Seite der Rotation vorgegeben ist, und zwar auf der Basis eines Segments, das ein Rotationszentrum (Bs) der Formtrommel (B) und eine äußerste Postition verbindet,
wobei drei Gummi-Spritzgießmaschinen zum Abgegeben von einer Vielzahl von Gummistreifen verwendet werden, wobei die eine der Spritzgießmaschinen in einer vertikalen Haltung installiert ist, während die beiden übrigen Spritzgießmaschinen in einer sich gegenseitig nicht beeinträchtigenden geneigten Haltung installiert sind, und wobei die Achsen von diesen Spritzgießmaschinen in dem angegebenen Bereich angeordnet sind.

2. Verfahren zum Herstellen eines Reifens nach Anspruch 1,
wobei die Gummiabgabevorrichtung (A) in einer derartigen Positionierung angeordnet ist, daß ihre Achse innerhalb eines Bereichs von ± 45° auf der Basis des Segments angeordnet ist.

## Revendications

1. Procédé de fabrication d'un pneumatique pour mouler une forme de pneumatique en déchargeant un ruban de caoutchouc (S) ayant une forme de section transversale prédéterminée par un appareil de décharge de caoutchouc (A) tout en faisant tourner un tambour de moulage (B), et en enroulant séquentiellement le ruban de caoutchouc déchargé (S) autour du tambour de moulage (B),
dans lequel le ruban de caoutchouc (S) déchargé de l'appareil de décharge de caoutchouc (A) est suspendu vers le bas dans une direction verticalement descendante de manière à être enroulé autour d'une surface du tambour de moulage (B), et la position en suspension du ruban de caoutchouc (S) est choisie dans une plage entre 45° vers un côté amont de la rotation et 90° vers un côté aval de la rotation, en se basant sur un segment qui connecte un centre de rotation (Bs) du tambour de moulage (B) et une position maximum,
dans lequel on utilise trois machines de moulage de caoutchouc par injection pour décharger une pluralité de rubans de caoutchouc, dans lesquelles l'une des machines de moulage par injection est installée dans une posture verticale, alors que les deux autres machines de moulage par injection restantes sont installées dans une posture inclinée qui n'interfère pas l'une avec l'autre, et dans lesquelles les axes de celles-ci sont placés dans la plage identifiée.

2. Procédé de fabrication d'un pneumatique selon la revendication 1,
**caractérisé en ce que** l'appareil de décharge de caoutchouc (A) est agencé dans une posture telle que son axe est agencé dans une plage de ± 45° en se basant sur le segment.
